# EUROPEAN PATENT APPLICATION

(11) **EP 4 764 986 A1**
(43) Date of publication of application: **24.06.2026**
(21) Application number: 25216864.6
(22) Date of filing: 19.11.2025
(51) Int. Cl.: G06Q 10/04, G06Q 10/0631, G06Q 50/04, G06Q 10/10

(54) **MANUFACTURING SYSTEM CHANGE CLASSIFICATION**

(30) Priority: 18.12.2024 US 202418986476
(71) Applicant: The Boeing Company, Arlington, VA 22202 (US)
(72) Inventor: MOKALLED, Stefani Carol, Arlington, 22202 (US); PAUL, Ranjan Kumar, Arlington, 22202 (US); KARMAKAR, Shilpi, Arlington, 22202 (US); YANG, Li, Arlington, 22202 (US); VELIUS, George Alfred, Arlington, 22202 (US); REHR, Amanda Pearl, Arlington, 22202 (US)
(74) Representative: Bugnion S.p.A. - US1

(57) **Abstract**

A computing system (10) is provided, including one or more processing devices (12) configured to receive a manufacturing change specification (20) of a proposed change (22) to a manufacturing system (24). At a first trained machine learning model (30), the one or more processing devices (12) are further configured to compute one or more predicted change categories (32) of the proposed change (22). At a second trained machine learning model (40), the one or more processing devices (12) are further configured to compute a change magnitude classification (42) associated with the proposed change (22). The second trained machine learning model (40) is configured to compute the change magnitude classification (42) based at least in part on the one or more predicted change categories (32). The one or more processing devices (12) are further configured to output the one or more predicted change categories (32) and the change magnitude classification (42) to a user interface (50).

## Description

### FIELD

The present disclosure is related to the development of manufacturing systems and processes.

### BACKGROUND

Aircraft manufacturing systems and processes are highly complex and can include thousands of different device components and manufacturing steps. As a result, changes to one portion of an aircraft manufacturing system or process can affect many other components or steps. Before such changes are made, those changes are reviewed by a design approval engineer (DAE) in order to determine their downstream effects. Reviewing aircraft manufacturing changes and checking for dependencies are time-consuming tasks that sometimes slow down the overall process of aircraft manufacturing system and process development.

Aircraft manufacturing is also a field in which changes to manufacturing systems and processes sometimes also require regulatory approval. Due to the complexity of aircraft manufacturing systems and processes, determining whether a change requires regulatory approval can be a difficult, time-consuming task for the DAE.

### SUMMARY

According to one aspect of the present disclosure, a computing system is provided, including one or more processing devices configured to receive a manufacturing change specification of a proposed change to a manufacturing system. At a first trained machine learning model, the one or more processing devices are further configured to compute one or more predicted change categories of the proposed change. At a second trained machine learning model, the one or more processing devices are further configured to compute a change magnitude classification associated with the proposed change. The second trained machine learning model is configured to compute the change magnitude classification based at least in part on the one or more predicted change categories. The one or more processing devices are further configured to output the one or more predicted change categories and the change magnitude classification to a user interface.

### BRIEF DESCRIPTION OF THE DRAWINGS

FIG. 1 schematically shows an example computing system at which one or more processing devices receive a manufacturing change specification, according to one example embodiment.
FIG. 2 schematically shows the computing system when the one or more processing devices are configured to train a first trained machine learning model, according to the example of FIG. 1.
FIG. 3 schematically shows the computing system when the one or more processing devices are configured to train the second trained machine learning model, according to the example of FIG. 2.
FIG. 4 shows example tables of data included in manufacturing change specifications and data output by the first trained machine learning model, according to the example of FIG. 1.
FIG. 5 shows the computing system in an example in which additional training is performed at the first trained machine learning model and the second trained machine learning model, according to the example of FIG. 1.
FIG. 6A shows a flowchart of a method for use with a computing system to categorize proposed changes to a manufacturing system, according to the example of FIG. 1.
FIG. 6B shows additional steps of the method of FIG. 6A that can be performed to train the first trained machine learning model and the second trained machine learning model.
FIG. 6C shows additional steps of the method of FIG. 6A that can be performed in some examples to update the machine learning models.
FIG. 7 schematically shows an example computing environment in which the computing system of FIG. 1 can be instantiated.

### DETAILED DESCRIPTION

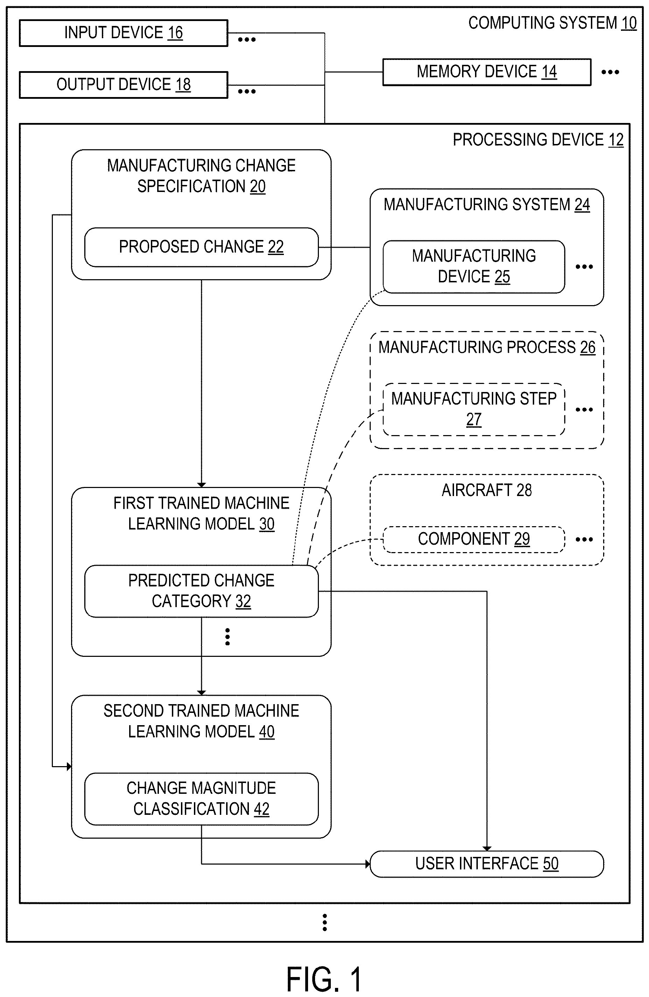

In order to address the challenges discussed above, a computing system 10 is provided, as shown in FIG. 1. FIG. 1 schematically shows an example computing system 10 that includes one or more processing devices 12 and one or more memory devices 14. The one or more processing devices 12 can, for example, include one or more central processing units (CPUs), one or more graphics processing units (GPUs), and/or one or more specialized hardware accelerators. The one or more memory devices 14 can include volatile memory and/or non-volatile storage. The computing system 10 can be implemented as a single physical computing device or as multiple communicatively coupled physical computing devices, such as in a server-client configuration. The computing system 10 shown in FIG. 1 further includes one or more input devices 16 and one or more output devices 18 via which a user can interact with the computing system 10.

As shown in FIG. 1, the one or more processing devices 12 are configured to receive a manufacturing change specification 20 of a proposed change 22 to a manufacturing system 24. For example, the proposed change 22 can be a proposed change to one or more manufacturing devices 25 included in the manufacturing system 24. Additionally or alternatively, the proposed change 22 can be a proposed change to one or more manufacturing steps 27 of a manufacturing process 26 performed at the manufacturing system 24. In the example of FIG. 1, the manufacturing system 24 is configured to manufacture an aircraft 28. In this example, the proposed change 22 can be a proposed change to one or more components 29 of the aircraft 28 manufactured at the manufacturing system 24.

At a first trained machine learning model 30, the one or more processing devices 12 are further configured to compute one or more predicted change categories 32 of the proposed change 22. For example, the one or more predicted change categories 32 can specify one or more manufacturing devices 25 included in the manufacturing system 24. As another example, the one or more predicted change categories 32 can specify one or more manufacturing steps 27 of a manufacturing process 26. In examples in which the manufacturing system 24 is configured to manufacture an aircraft 28, the one or more predicted change categories 32 can specify one or more components 29 of the aircraft 28 manufactured at the manufacturing system 24.

The first trained machine learning model 30 is configured to receive the manufacturing change specification 20 as input. The first trained machine learning model 30 shown in the example of FIG. 1 is a multi-label classifier model that classifies the proposed change 22 according to whether it belongs to each of a plurality of potential change categories. The first trained machine learning model 30 can, for example, be an XGBoost model. As another example, the first trained machine learning model 30 can be a random forest model. In some examples, the first trained machine learning model 30 outputs the one or more predicted change categories as an n-dimensional vector of Boolean values, where n is the number of potential change categories.

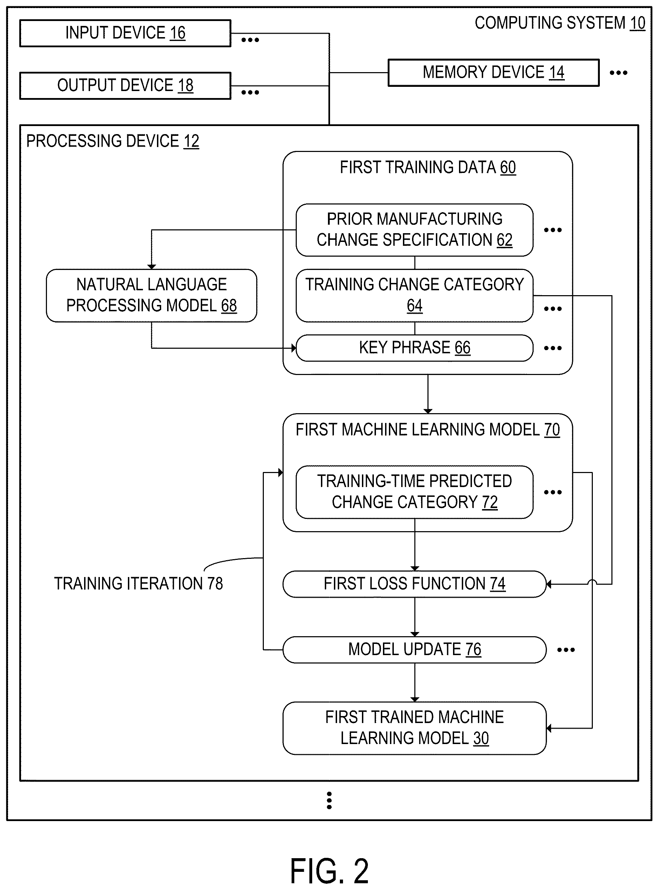

FIG. 2 schematically shows the computing system 10 when the one or more processing devices 12 are configured to train the first trained machine learning model 30. The first trained machine learning model 30 is trained using first training data 60 including a plurality of prior manufacturing change specifications 62. The plurality of prior manufacturing change specifications 62 indicate respective prior changes to the manufacturing system 24. In addition, the first training data 60 includes a respective plurality of training change categories 64 of the prior changes. The training change categories 64 can be change categories previously selected by one or more DAEs who reviewed the prior manufacturing change specifications 62.

In some examples, for each of the prior manufacturing change specifications 62, the one or more processing devices 12 are further configured to compute one or more key phrases 66 associated with that prior manufacturing change specification 62. In such examples, the first training data 60 further includes the key phrases 66. As shown in the example of FIG. 2, the key phrases 66 can be computed at a natural language processing (NLP) model 68 at least in part by inputting the prior manufacturing change specification 62 into the natural language processing model 68. Including the key phrases 66 in the first training data 60 can make the outputs of the first trained machine learning model 30 more consistent in examples in which there are stylistic differences and/or templating differences among the plurality of prior manufacturing change specifications 62.

In each of a plurality of training iterations 78, the one or more processing devices 12 are further configured to input batches of the prior manufacturing change specifications 62, along with the corresponding key phrases 66, into a first machine learning model 70. The first machine learning model 70 is configured to compute one or more respective training-time predicted change categories 72 for each of the prior manufacturing change specifications 62. The one or more processing devices 12 are further configured to compute respective values of a first loss function 74 based at least in part on the training-time predicted change categories 72 and the training change categories 64. For example, the first loss function 74 can be a Hamming loss function. The one or more processing devices 12 are further configured to compute a model update 76 based at least in part on the value of the first loss function 74. This model update 76 can be computed via stochastic gradient descent (SGD). The one or more processing devices 12 are further configured to apply the model update 76 to the first machine learning model 70. The one or more processing devices 12 are accordingly configured to train the first machine learning model 70 over the plurality of training iterations 78 to obtain the first trained machine learning model 30.

Returning to the example of FIG. 1, the one or more processing devices 12 are further configured to compute a change magnitude classification 42 associated with the proposed change 22 at a second trained machine learning model 40. The change magnitude classification 42 can be a binary classification in some examples. In such examples, the change magnitude classification 42 can be a classification of whether the proposed change 22 is a major change (a change that requires regulatory approval) or a minor change (a change that does not require regulatory approval). In some examples, the change magnitude classification 42 is a multi-dimensional binary classification that indicates major or minor for each of a plurality of categories (e.g., the proposed change categories 32).

The second trained machine learning model 40 is configured to receive the manufacturing change specification 20 as input. In addition, the second trained machine learning model 40 is configured to compute the change magnitude classification 42 based at least in part on the one or more predicted change categories 32 computed for the proposed change 22 at the first trained machine learning model 30. Since changes to some manufacturing devices 25, manufacturing steps 27, and/or components 29 are more likely to be major than changes to others, the second trained machine learning model 40 can compute the change magnitude classification 42 more accurately by using the one or more predicted change categories 32 as input. The second trained machine learning model 40 can, for example, be an XGBoost model.

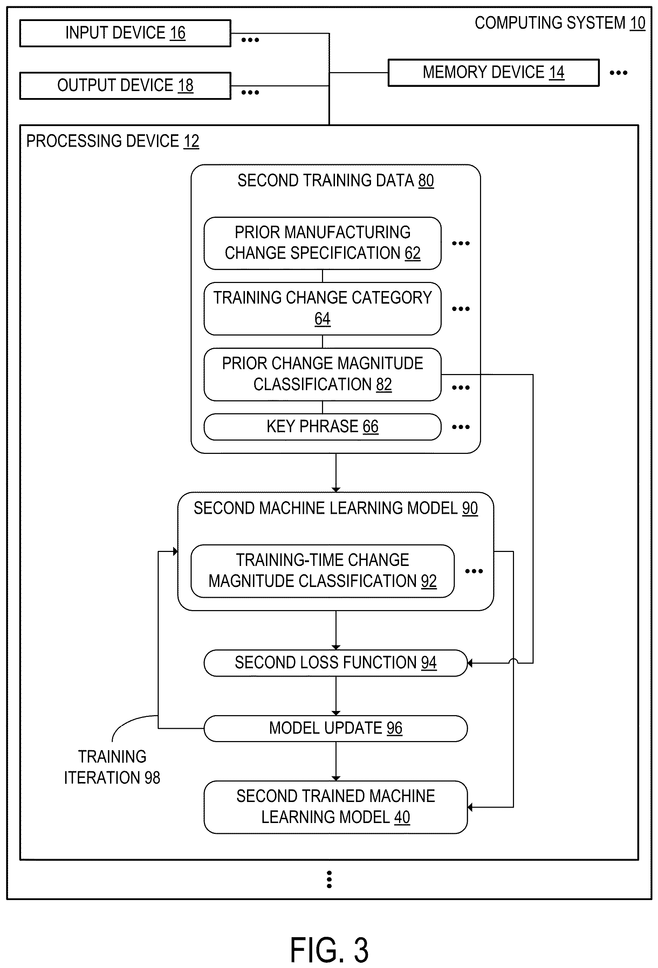

FIG. 3 schematically shows the computing system 10 during training of the second trained machine learning model 40. The one or more processing devices 12 are configured to train the second trained machine learning model 40 using second training data 80 including the plurality of prior manufacturing change specifications 62. The second training data 80 further includes the plurality of training change categories 64 of the prior changes indicated in the prior manufacturing change specifications 62. In examples in which the one or more processing devices 12 are configured to compute key phrases 66 associated with the prior manufacturing change specifications 62, the key phrases 66 can also be included in the second training data 80. The second training data 80 further includes a respective plurality of prior change magnitude classifications 82 associated with the prior changes. For example, the prior change magnitude classifications 82 can be change magnitude classifications assigned to the prior manufacturing change specifications 62 by one or more DAEs.

In each of a plurality of training iterations 98, the one or more processing devices 12 are further configured to input batches of the prior manufacturing change specifications 62, the training change categories 64, and the key phrases 66 into a second machine learning model 90, which is configured to compute respective training-time change magnitude classifications 92 associated with the prior manufacturing change specifications 62. The one or more processing devices 12 are further configured to compute values of a second loss function 94 based at least in part on the training-time change magnitude classifications 92 and the prior change magnitude classifications 82. The one or more processing devices 12 are further configured to compute a model update 96 (for example, via SGD) based at least in part on the second loss function 94 and apply that model update 96 to the second machine learning model 90. Thus, the one or more processing devices 12 are configured to update the second machine learning model 90 across the plurality of training iterations 98 to obtain the second trained machine learning model 40.

Returning to the example of FIG. 1, subsequently to computing the one or more predicted change categories 32 and the change magnitude classification 42 associated with the proposed change 22, the one or more processing devices 12 are further configured to output the one or more predicted change categories 32 and the change magnitude classification 42 to a user interface 50. For example, the user interface 50 can be a graphical user interface (GUI) displayed at one or more display devices included among the one or more output devices 18 in the computing system 10.

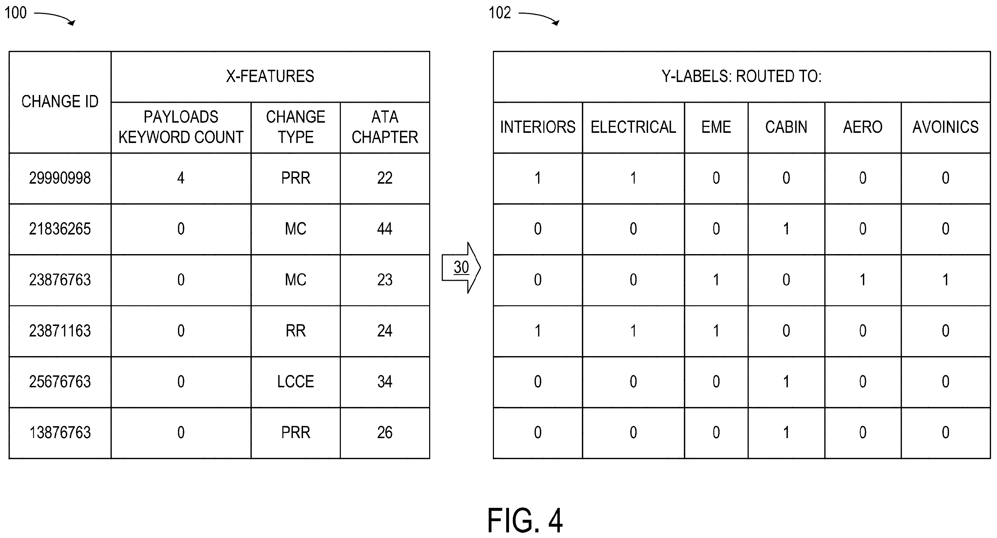

FIG. 4 shows an example mapping from data included in manufacturing change specifications 20 to the predicted change categories 32 associated with those manufacturing change specifications 20. A first table 100 shown in FIG. 4 includes respective change identifiers associated with the proposed changes 22. The first table 100 further includes a "payloads keyword count" column that shows the numbers of key phrases 66 for those manufacturing change specifications 20 that are associated with aircraft payloads. The first table 100 further includes a "change type" column that includes respective change type tags given for the proposed changes 22 in the manufacturing change specifications 20. In addition, the first table 100 includes an "ATA chapter" column indicating specific regulations listed in the manufacturing change specifications 20 as relevant to the proposed changes 22.

FIG. 4 further shows a second table 102 including Boolean indicators (either 0 or 1) for the proposed changes 22. The Boolean indicators for a proposed change 22 specify whether the first trained machine learning model 30 has identified that proposed change 22 as belonging to each of a respective plurality of predicted change categories. Thus, in the example of FIG. 4, the rows of the second table 102 are the n-dimensional vectors of Boolean values output by the first trained machine learning model 30. The columns of the second table 102 shown in the example of FIG. 4 are "interiors," "electrical," "EME," "cabin," "aero," and "avionics."

The following table shows experimental data related to the performance of the first trained machine learning model 30. The following table compares the performance of a plurality of different statistical models, including XGBoost (XGB), random forest (RF), k-nearest neighbors (KNN), support vector machine (SVM), decision tree, and logistic.

| Model | Hamming loss | Precision | Recall | F1 |
|---|---|---|---|---|
| XGB | 2.8% | 85.8% | **83.7%** | **83.0%** |
| RF | **2.7%** | **86.2%** | 81.7% | 82.3% |
| KNN | 3.5% | 83.5% | 80.7% | 79.9% |
| SVM | 4.7% | 75.5% | 73.2% | 71.7% |
| Decision tree | 4.2% | 78.7% | 81.2% | 77.7% |
| Logistic | 4.6% | 75.8% | 71.7% | 71.2% |

The above table shows that XGB had the highest performance in terms of recall and F1, with the second-highest performance in terms of Hamming loss and precision. The RF model had the highest performance in terms of Hamming loss and precision, as well as the second-highest performance in terms of recall and F1.

The following table shows experimental data related to the performance of the second trained machine learning model 40. The following table compares the performance of a plurality of different machine learning models, including weighted XGB, unweighted XGB, multi-layer perceptron (MLP), AdaBoost, weighted support vector classifier (SVC), and balanced RF.

| Model | Accuracy | Precision | Recall | F1 |
|---|---|---|---|---|
| XGB (weighted) | 98.8% | 94.6% | **91.5%** | 93.0% |
| XGB (not weighted) | **98.9%** | **98.0%** | 89.7% | **93.7%** |
| MLP | 98.2% | 89.0% | 90.4% | 89.7% |
| AdaBoost | 98.4% | 94.8% | 87.2% | 90.9% |
| SVC (weighted) | 96.0% | 70.7% | 93.8% | 80.7% |
| RF (balanced) | 98.6% | 98.9% | 85.4% | 91.6% |

The above table shows that unweighted XGB had the highest performance in terms of accuracy, precision, and F1, with the second-highest performance in recall.

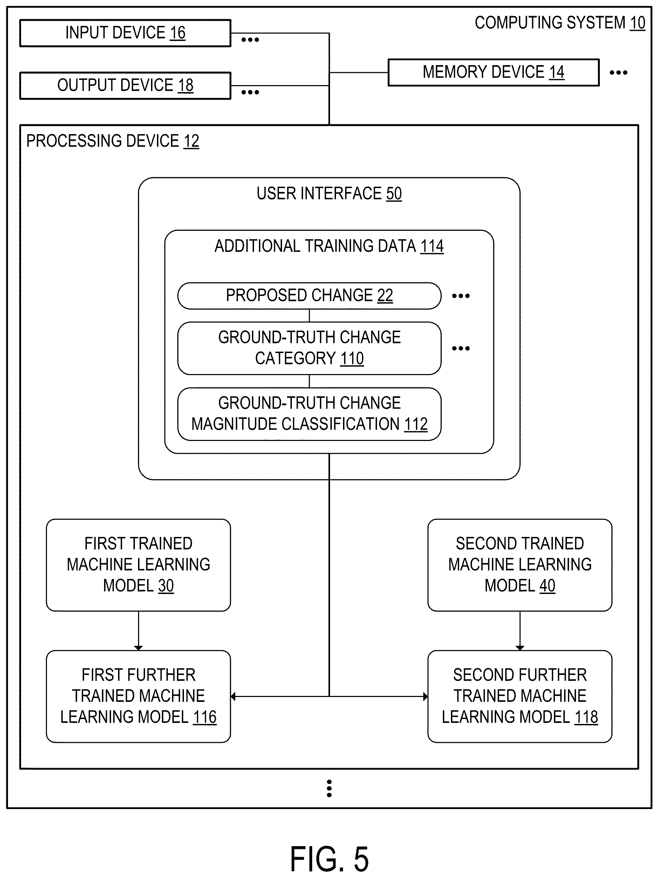

FIG. 5 shows the computing system 10 in an example in which additional training is performed at the first trained machine learning model 30 and the second trained machine learning model 40 after deployment. In the example of FIG. 5, the one or more processing devices 12 are further configured to receive additional training data 114 including one or more ground-truth change categories 110 and a ground-truth change magnitude classification 112 associated with the proposed change 22. The one or more ground-truth change categories 110 and the ground-truth change magnitude classification 112 are received as user feedback via the user interface 50 subsequently to the one or more processing devices 12 outputting the one or more predicted change categories 32 and the change magnitude classification 42. The user can input the one or more ground-truth change categories 110 and the ground-truth change magnitude classification 112 using the one or more input devices 16. In some examples, the one or more ground-truth change categories 110 and the ground-truth change magnitude classification 112 are an approval of the one or more predicted change categories and the change magnitude classification 42 respectively computed at the first trained machine learning model 30 and the second trained machine learning model 40.

The one or more processing devices 12 are further configured to perform additional training at the first trained machine learning model 30 and the second training machine learning model 40 using the additional training data 114. Thus, the one or more processing devices 12 are configured to compute a first further trained machine learning model 116 and a second further trained machine learning model 118 that are updated to reflect one or more ground-truth change categories 110 and a ground-truth change magnitude classification 112 selected by the user. The additional training of the first trained machine learning model 30 and the second trained machine learning model 40 can be performed as discussed above with reference to FIGS. 2-3.

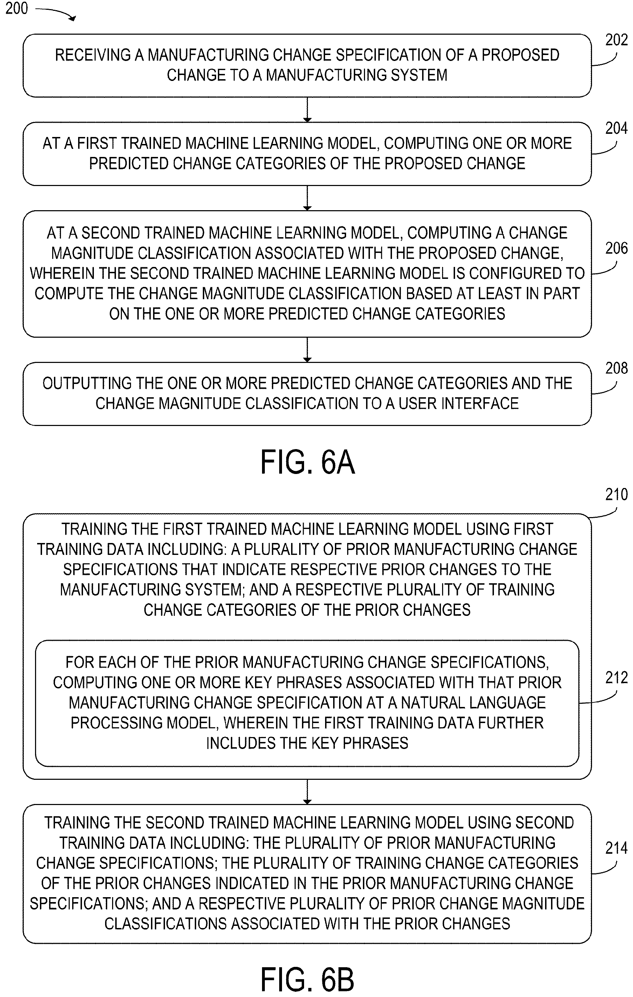

FIG. 6A shows a flowchart of a method 200 for use with a computing system to categorize proposed changes to a manufacturing system. At step 202, the method 200 includes receiving a manufacturing change specification of a proposed change to a manufacturing system. For example, the proposed change can be a proposed change to one or more manufacturing devices and/or one or more manufacturing steps. In some examples, the manufacturing system is configured to manufacture an aircraft. The proposed change can be a change to one or more components of the aircraft. The manufacturing change specification can be a document uploaded at a user interface.

At step 204, the method 200 further includes computing one or more predicted change categories of the proposed change at a first trained machine learning model. For example, the first trained machine learning model can be an XGBoost model or a random forest model. The first trained machine learning model, in some examples, outputs an n-dimensional vector of Boolean values, where n is a number of potential change categories. The one or more predicted change categories can specify one or more manufacturing devices included in the manufacturing system, one or more manufacturing steps of a manufacturing process, or one or more components of the aircraft or other device manufactured at the manufacturing system.

At step 206, the method 200 further includes computing a change magnitude classification associated with the proposed change at a second trained machine learning model. The second trained machine learning model is configured to compute the change magnitude classification based at least in part on the one or more predicted change categories. In addition, the second trained machine learning model is configured to receive the manufacturing change specification as an input. In some examples, the change magnitude classification is a binary classification. For example, the binary classification can be a classification of whether the proposed change requires regulatory approval. The change magnitude classification may, in some examples, be a multi-dimensional binary classification that is computed for a plurality of different categories, such as the predicted change categories computed at step 204.

At step 208, the method 200 further includes outputting the one or more predicted change categories and the change magnitude classification to a user interface.

Accordingly, a DAE can review the predicted change categories and the change magnitude classification predicted by the machine learning models.

FIG. 6B shows additional steps of the method 200 that can be performed to train the first trained machine learning model and the second trained machine learning model. At step 210, the method 200 includes training the first trained machine learning model using first training data including a plurality of prior manufacturing change specifications and a respective plurality of training change categories. The prior manufacturing change specifications indicate respective prior changes to the manufacturing system, and the training change categories are associated with the prior changes.

In some examples, step 210 further includes step 212. At step 212, for each of the prior manufacturing change specifications, the method 200 further includes computing one or more key phrases associated with that prior manufacturing change specification at a natural language processing model. The first training data further includes the key phrases in examples in which step 212 is performed.

At step 214, the method 200 further includes training the second trained machine learning model using second training data. The second training data includes the plurality of prior manufacturing change specifications included in the first training data. In addition, the second training data includes the plurality of training change categories of the prior changes indicated in the prior manufacturing change specifications. The second training data further includes a respective plurality of prior change magnitude classifications associated with the prior changes. In examples in which step 212 is performed, the key phrases can also be included in the second training data.

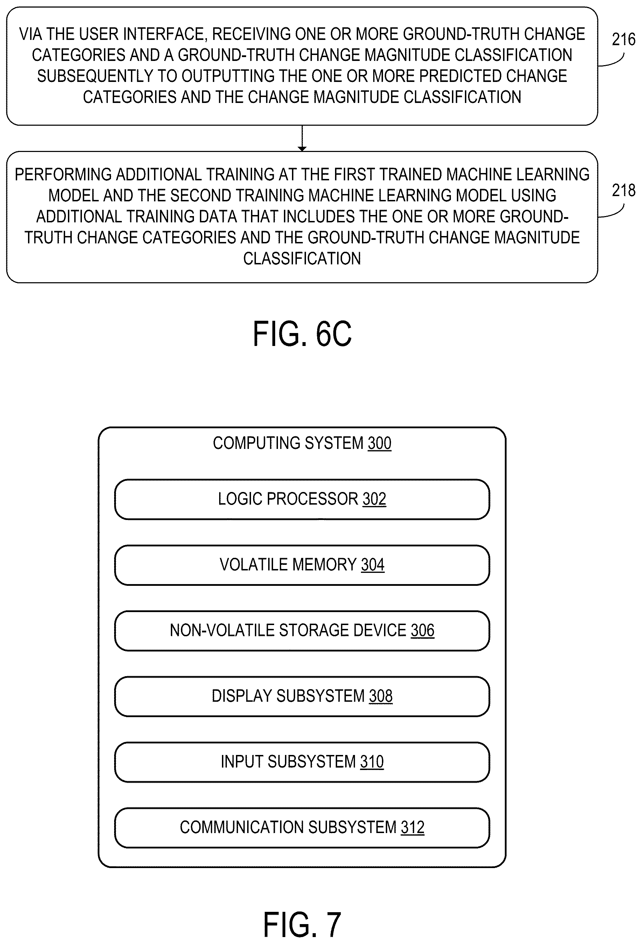

FIG. 6C shows additional steps of the method 200 that can be performed in some examples to update the machine learning models. At step 216, the method 200 further includes receiving one or more ground-truth change categories and a ground-truth change magnitude classification via the user interface. The one or more ground-truth change categories and the ground-truth change magnitude classification are received subsequently to outputting the one or more predicted change categories and the change magnitude classification.

At step 218, the method 200 further includes performing additional training at the first trained machine learning model and the second training machine learning model using additional training data that includes the one or more ground-truth change categories and the ground-truth change magnitude classification. The first trained machine learning model and the second trained machine learning model can accordingly be updated with user feedback.

Using the systems and methods discussed above, a proposed change to a manufacturing process is programmatically categorized using machine learning models. These machine learning models predict which portions of the manufacturing system or process are influenced by the proposed change, as well as the magnitude of the proposed change. The experimental results discussed above demonstrate that the machine learning models achieve high accuracy in these predictions. Thus, the systems and methods discussed above can significantly decrease the amount of time spent by DAEs when determining the effects of proposed changes to manufacturing systems.

The methods and processes described herein are tied to a computing system of one or more computing devices. In particular, such methods and processes can be implemented as a computer-application program or service, an application-programming interface (API), a library, and/or other computer-program product.

FIG. 7 schematically shows a non-limiting embodiment of a computing system 300 that can enact one or more of the methods and processes described above. Computing system 300 is shown in simplified form. Computing system 300 can embody the computing system 10 described above and illustrated in FIG. 1. Components of computing system 300 can be included in one or more personal computers, server computers, tablet computers, home-entertainment computers, network computing devices, mobile computing devices, mobile communication devices (e.g., smartphone), and/or other computing devices, and wearable computing devices such as smart wristwatches and head mounted augmented reality devices.

Computing system 300 includes processing circuitry 302, volatile memory 304, and a non-volatile storage device 306. Computing system 300 can optionally include a display subsystem 308, input subsystem 310, communication subsystem 312, and/or other components not shown in FIG. 7.

Processing circuitry 302 typically includes one or more logic processors, which are physical devices configured to execute instructions. For example, the logic processors can be configured to execute instructions that are part of one or more applications, programs, routines, libraries, objects, components, data structures, or other logical constructs. Such instructions can be implemented to perform a task, implement a data type, transform the state of one or more components, achieve a technical effect, or otherwise arrive at a desired result.

The logic processor 302 can include one or more physical processors configured to execute software instructions. Additionally or alternatively, the logic processor 302 can include one or more hardware logic circuits or firmware devices configured to execute hardware-implemented logic or firmware instructions. Processors of the processing circuitry 302 can be single-core or multi-core, and the instructions executed thereon can be configured for sequential, parallel, and/or distributed processing. Individual components of the processing circuitry 302 optionally can be distributed among two or more separate devices, which can be remotely located and/or configured for coordinated processing. For example, aspects of the computing system 300 disclosed herein can be virtualized and executed by remotely accessible, networked computing devices configured in a cloud-computing configuration. In such a case, these virtualized aspects are run on different physical logic processors of various different machines, it will be understood. These different physical logic processors of the different machines will be understood to be collectively encompassed by processing circuitry 302. Non-volatile storage device 306 includes one or more physical devices configured to hold instructions executable by the processing circuitry to implement the methods and processes described herein. When such methods and processes are implemented, the state of non-volatile storage device 306 can be transformed-e.g., to hold different data. Non-volatile storage device 306 can include physical devices that are removable and/or built in. Non-volatile storage device 306 can include optical memory, semiconductor memory, and/or magnetic memory, or other mass storage device technology. Non-volatile storage device 306 can include nonvolatile, dynamic, static, read/write, read-only, sequential-access, location-addressable, file-addressable, and/or content-addressable devices. It will be appreciated that non-volatile storage device 306 is configured to hold instructions even when power is cut to the non-volatile storage device 306.

Volatile memory 304 can include physical devices that include random access memory. Volatile memory 304 is typically utilized by processing circuitry 302 to temporarily store information during processing of software instructions. It will be appreciated that volatile memory 304 typically does not continue to store instructions when power is cut to the volatile memory 304.

Aspects of processing circuitry 302, volatile memory 304, and non-volatile storage device 306 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" can be used to describe an aspect of computing system 300 typically implemented in software by a processor to perform a particular function using portions of volatile memory, which function involves transformative processing that specially configures the processor to perform the function. Thus, a module, program, or engine can be instantiated via processing circuitry 302 executing instructions held by non-volatile storage device 306, using portions of volatile memory 304. It will be understood that different modules, programs, and/or engines can be instantiated from the same application, service, code block, object, library, routine, API, function, etc. Likewise, the same module, program, and/or engine can be instantiated by different applications, services, code blocks, objects, routines, APIs, functions, etc. The terms "module," "program," and "engine" can encompass individual or groups of executable files, data files, libraries, drivers, scripts, database records, etc.

When included, display subsystem 308 can be used to present a visual representation of data held by non-volatile storage device 306. The visual representation can take the form of a graphical user interface (GUI). As the herein described methods and processes change the data held by the non-volatile storage device 306, and thus transform the state of the non-volatile storage device 306, the state of display subsystem 308 can likewise be transformed to visually represent changes in the underlying data. Display subsystem 308 can include one or more display devices utilizing virtually any type of technology. Such display devices can be combined with processing circuitry 302, volatile memory 304, and/or non-volatile storage device 306 in a shared enclosure, or such display devices can be peripheral display devices.

When included, input subsystem 310 can comprise or interface with one or more user-input devices such as a keyboard, mouse, touch screen, camera, or microphone.

When included, communication subsystem 312 can be configured to communicatively couple various computing devices described herein with each other, and with other devices. Communication subsystem 312 can include wired and/or wireless communication devices compatible with one or more different communication protocols. As non-limiting examples, the communication subsystem 312 can be configured for communication via a wired or wireless local- or wide-area network, broadband cellular network, etc. In some embodiments, the communication subsystem 312 can allow computing system 300 to send and/or receive messages to and/or from other devices via a network such as the Internet.

Further, the disclosure comprises configurations according to the following examples.

Example 1. A computing system comprising: one or more processing devices configured to: receive a manufacturing change specification of a proposed change to a manufacturing system; at a first trained machine learning model, compute one or more predicted change categories of the proposed change; at a second trained machine learning model, compute a change magnitude classification associated with the proposed change, wherein the second trained machine learning model is configured to compute the change magnitude classification based at least in part on the one or more predicted change categories; and output the one or more predicted change categories and the change magnitude classification to a user interface.

Example 2. The computing system of Example 1, wherein the one or more processing devices are further configured to train the first trained machine learning model using first training data including: a plurality of prior manufacturing change specifications that indicate respective prior changes to the manufacturing system; and a respective plurality of training change categories of the prior changes.

Example 3. The computing system of Example 2, wherein: for each of the prior manufacturing change specifications, the one or more processing devices are further configured to compute one or more key phrases associated with that prior manufacturing change specification at a natural language processing model; and the first training data further includes the key phrases.

Example 4. The computing system of Example 2 or 3, wherein the one or more processing devices are further configured to train the second trained machine learning model using second training data including: the plurality of prior manufacturing change specifications; the plurality of training change categories of the prior changes indicated in the prior manufacturing change specifications; and a respective plurality of prior change magnitude classifications associated with the prior changes.

Example 5. The computing system of any of Examples 1-4, wherein the change magnitude classification is a multi-dimensional binary classification.

Example 6. The computing system of any of Examples 1-5, wherein the one or more processing devices are further configured to: via the user interface, receive one or more ground-truth change categories and a ground-truth change magnitude classification subsequently to outputting the one or more predicted change categories and the change magnitude classification; and perform additional training at the first trained machine learning model and the second training machine learning model using additional training data that includes the one or more ground-truth change categories and the ground-truth change magnitude classification.

Example 7. The computing system of any of Examples 1-6, wherein the one or more predicted change categories specify one or more manufacturing devices included in the manufacturing system.

Example 8. The computing system of any of Examples 1-7, wherein the one or more predicted change categories specify one or more manufacturing steps of a manufacturing process.

Example 9. The computing system of Example 1, wherein: the manufacturing system is configured to manufacture an aircraft; and the one or more predicted change categories specify one or more components of the aircraft manufactured at the manufacturing system.

Example 10. The computing system of any of Examples 1-9, wherein the first trained machine learning model outputs an n-dimensional vector of Boolean values, where n is a number of potential change categories.

Example 11. A method for use with a computing system, the method comprising: receiving a manufacturing change specification of a proposed change to a manufacturing system; at a first trained machine learning model, computing one or more predicted change categories of the proposed change; at a second trained machine learning model, computing a change magnitude classification associated with the proposed change, wherein the second trained machine learning model is configured to compute the change magnitude classification based at least in part on the one or more predicted change categories; and outputting the one or more predicted change categories and the change magnitude classification to a user interface.

Example 12. The method of Example 11, further comprising training the first trained machine learning model using first training data including: a plurality of prior manufacturing change specifications that indicate respective prior changes to the manufacturing system; and a respective plurality of training change categories of the prior changes.

Example 13. The method of Example 12, further comprising, for each of the prior manufacturing change specifications, computing one or more key phrases associated with that prior manufacturing change specification at a natural language processing model, wherein the first training data further includes the key phrases.

Example 14. The method of Example 12 or 13, further comprising training the second trained machine learning model using second training data including: the plurality of prior manufacturing change specifications; the plurality of training change categories of the prior changes indicated in the prior manufacturing change specifications; and a respective plurality of prior change magnitude classifications associated with the prior changes.

Example 15. The method of any of Examples 11-14, wherein the change magnitude classification is a multi-dimensional binary classification.

Example 16. The method of any of Examples 11-15, further comprising: via the user interface, receiving one or more ground-truth change categories and a ground-truth change magnitude classification subsequently to outputting the one or more predicted change categories and the change magnitude classification; and performing additional training at the first trained machine learning model and the second training machine learning model using additional training data that includes the one or more ground-truth change categories and the ground-truth change magnitude classification.

Example 17. The method of any of Examples 11-16, wherein the one or more predicted change categories specify one or more manufacturing devices included in the manufacturing system.

Example 18. The method of any of Examples 11-17, wherein the one or more predicted change categories specify one or more manufacturing steps of a manufacturing process. Example 19. The method of any of Examples 11-18, wherein: the manufacturing system is configured to manufacture an aircraft; and the one or more predicted change categories specify one or more components of the aircraft manufactured at the manufacturing system.

Example 20. A computing system comprising: one or more processing devices configured to: train a first trained machine learning model using first training data including: a plurality of prior manufacturing change specifications that indicate respective prior changes to a manufacturing system; a respective plurality of training change categories of the prior changes; and a plurality of key phrases respectively associated with the prior manufacturing change specifications; train a second trained machine learning model using second training data including: the plurality of prior manufacturing change specifications; the plurality of training change categories of the prior changes indicated in the prior manufacturing change specifications; a respective plurality of prior change magnitude classifications associated with the prior changes; and the plurality of key phrases; receive a manufacturing change specification of a proposed change to a manufacturing system; at the first trained machine learning model, compute one or more predicted change categories of the proposed change; at the second trained machine learning model, based at least in part on the one or more predicted change categories, compute a change magnitude classification associated with the proposed change; and output the one or more predicted change categories and the change magnitude classification to a user interface.

"And/or" as used herein is defined as the inclusive or V, as specified by the following truth table:

| A | B | AVB |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein can represent one or more of any number of processing strategies. As such, various acts illustrated and/or described can be performed in the sequence illustrated and/or described, in other sequences, in parallel, or omitted. Likewise, the order of the above-described processes can be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computing system (10) comprising:
one or more processing devices (12) configured to:
receive a manufacturing change specification (20) of a proposed change (22) to a manufacturing system (24);
at a first trained machine learning model (30), compute one or more predicted change categories (32) of the proposed change (22);
at a second trained machine learning model (40), compute a change magnitude classification (42) associated with the proposed change (22), wherein the second trained machine learning model (40) is configured to compute the change magnitude classification (42) based at least in part on the one or more predicted change categories (32); and
output the one or more predicted change categories (32) and the change magnitude classification (42) to a user interface (50).

2. The computing system (10) of claim 1, wherein the one or more processing devices (12) are further configured to train the first trained machine learning model (30) using first training data (60) including:
a plurality of prior manufacturing change specifications (62) that indicate respective prior changes to the manufacturing system (24); and
a respective plurality of training change categories (64) of the prior changes.

3. The computing system (10) of claim 2, wherein:
for each of the prior manufacturing change specifications (62), the one or more processing devices (12) are further configured to compute one or more key phrases (66) associated with that prior manufacturing change specification (62) at a natural language processing model (68); and
the first training data (60) further includes the key phrases (66).

4. The computing system (10) of claim 2 or 3, wherein the one or more processing devices (12) are further configured to train the second trained machine learning model (40) using second training data (80) including:
the plurality of prior manufacturing change specifications (62);
the plurality of training change categories (64) of the prior changes indicated in the prior manufacturing change specifications (62); and
a respective plurality of prior change magnitude classifications (82) associated with the prior changes.

5. The computing system (10) of any one of the preceding claims, wherein the change magnitude classification (42) is a multi-dimensional binary classification.

6. The computing system (10) of any one of the preceding claims, wherein the one or more processing devices (12) are further configured to:
via the user interface (50), receive one or more ground-truth change categories (110) and a ground-truth change magnitude classification (112) subsequently to outputting the one or more predicted change categories (32) and the change magnitude classification (42); and
perform additional training at the first trained machine learning model (30) and the second training machine learning model (40) using additional training data (114) that includes the one or more ground-truth change categories (110) and the ground-truth change magnitude classification (112).

7. The computing system (10) of any one of the preceding claims, wherein the one or more predicted change categories (32) specify one or more manufacturing devices (25) included in the manufacturing system (24).

8. The computing system (10) of any one of the preceding claims, wherein the one or more predicted change categories (32) specify one or more manufacturing steps (27) of a manufacturing process (26).

9. The computing system (10) of any one of the preceding claims, wherein:
the manufacturing system (24) is configured to manufacture an aircraft (28); and
the one or more predicted change categories (32) specify one or more components (29) of the aircraft (28) manufactured at the manufacturing system (24).

10. The computing system (10) of any one of the preceding claims, wherein the first trained machine learning model (30) is configured to output an n-dimensional vector of Boolean values, where n is a number of potential change categories.

11. A method (200) for use with a computing system, the method (200) comprising:
receiving a manufacturing change specification of a proposed change to a manufacturing system (202);
at a first trained machine learning model, computing one or more predicted change categories of the proposed change (204);
at a second trained machine learning model, computing a change magnitude classification associated with the proposed change, wherein the second trained machine learning model is configured to compute the change magnitude classification based at least in part on the one or more predicted change categories (206); and
outputting the one or more predicted change categories and the change magnitude classification to a user interface (208).

12. The method (200) of claim 11, further comprising training the first trained machine learning model (210) using first training data including:
a plurality of prior manufacturing change specifications that indicate respective prior changes to the manufacturing system; and
a respective plurality of training change categories of the prior changes.

13. The method (200) of claim 12, further comprising, for each of the prior manufacturing change specifications, computing one or more key phrases associated with that prior manufacturing change specification at a natural language processing model (212), wherein the first training data further includes the key phrases.

14. The method (200) of claim 12 or 13, further comprising training the second trained machine learning model (214) using second training data including:
the plurality of prior manufacturing change specifications;
the plurality of training change categories of the prior changes indicated in the prior manufacturing change specifications; and
a respective plurality of prior change magnitude classifications associated with the prior changes.

15. The method (200) of any one of claims 11 to 14, further comprising:
via the user interface, receiving one or more ground-truth change categories and a ground-truth change magnitude classification subsequently to outputting the one or more predicted change categories and the change magnitude classification (216); and
performing additional training at the first trained machine learning model and the second training machine learning model using additional training data that includes the one or more ground-truth change categories and the ground-truth change magnitude classification (218).
